# EUROPEAN PATENT SPECIFICATION

(11) **EP 0 575 087 B1**
(45) Date of publication and mention of the grant of the patent: **29.09.1999**
(21) Application number: 93304432.3
(22) Date of filing: 08.06.1993
(51) Int. Cl.: E05B 49/00

(54) **An identification code input board for an electrical lock or the like**
Kode-Eingabevorrichtung für ein elektrisches Schloss oder dergleichen
Dispositif d'entrée de code pour une serrure électrique ou similaire

(30) Priority: 13.06.1992 JP 17903392
(43) Date of publication of application: 22.12.1993
(73) Proprietor: MIWA LOCK KABUSHIKI KAISHA, Minato-ku Tokyo (JP)
(72) Inventor: Wake, Hideo, Yokohama-shi, Kanagawa-ken, 225 (JP); Naka, Katsufumi, Watarai-gun, Mie-ken, 519-05 (JP)
(74) Representative: Palmer, Roger

(56) References cited:
- EP-A- 0 147 837
- EP-A- 0 306 997
- WO-A-81/02349

## Description

The present invention relates generally to an identification code input board employable for an electrical lock, an activating unit for an important systematic equipment or the like. More particularly, the present invention relates to an identification cord input board (hereinafter referred to simply as an input board) which assures that safety of the electrical lock or the like and properties of actuation of the same can substantially be improved.

For example, when an electrical lock is locked or unlocked, usually, an identification code is first inputted into an input board placed on the inlet side of a door, and thereafter, a predetermined number of handling steps are executed by a user's hand.

Usually, the input board includes a plurality of light emitting diodes (hereinafter referred to simply as LED) adapted to display ten arabic numerals 0 to 9 and two control codes in each of, e.g., twelve display sections arranged in the form of 4 lines X 3 rows, and each display is fed to a control circuit in the electrical lock in the form of a code via a transparent key switch panel superimposed on the LED by depressing one of keys on the key switch panel with a user's finger.

As the input board is repeatedly used for a short time, there arises a malfunction that the content of the identification code is undesirably perceived by a third person in the presence of sweat and/or fat adhering to the key switch panel. In addition, there is a possibility that the content of the identification code is likewise undesirably perceived by the third person based on a frictional injury, a frictional scratch or the like caused on the key switch panel as the input board is repeatedly used for a long time. Thus, since the conventional input board is constructed in the above-described manner, there is a danger that the content of the identification code is readily known by the third person based on mathematic permutations and combinations made by himself for searching for the identification code specifically allocated to the input board.

To obviate the foregoing malfunctions, a proposal has been made with respect to an input board which is constructed such that an extensively developed arrangement pattern of codes on a display panel is caused to randomly or regularly vary every time an actuating unit for actuating the electrical lock is activated, and the thus proposed input board is put in practical use.

With the proposed input board, it is certain that there does not arise a malfunction that the content of the identification code specifically allocated to the input board is undesirably perceived by a third person based on a functional injury, a frictional scratch or the like caused on the front surface of a key switch panel as the input board is repeatedly used for a long time. However, since the display position of the identification code on the key switch panel is caused to vary every time an actuation unit, e.g., an electromagnetic actuator or the like for actuating the electrical lock is activated, resulting in the input board being practically used with much inconveniences.

WO-A-8 102 349 disclosed an identification code input apparatus with a number of display units arranged in rows and columns, each display unit having an input key associated with it. Each time the apparatus is used numeric values are randomly displayed on the display units and the associated input keys are used to input a preset identification code.

The present invention has been made in consideration of the foregoing background.

An object of embodiments of the present invention is to provide an identification code input board employable for an electrical lock or the like which assures that there does not arise a malfunction that the content of an identification code is undesirably perceived by a third person in the presence of sweat and/or fat adhering to a display panel as the identification code input board is repeatedly used for a short time.

Another object of embodiments of the present invention is to provide an identification code input board employable for an electrical lock or the like which assures that there does not arise a malfunction that the content of the identification code is likewise undesirably perceived by the third person based on a frictional injury, a frictional scratch or the like caused on the front surface of the display panel as the identification code input board is repeated used for a long time.

A further object of embodiments of the present invention is to provide an identification code input board employable for an electrical lock or the like which assures that the does not arise a malfunction that the content of the identification code is readily known by any unauthorized person based on mathematic permutations and combinations made by himself for searching for the identification code specifically allocated to the identification code input board.

According to the present invention there is provided an identification code input board for an electrical lock, comprising a display panel crosswise arranged in the form of M lines X N rows and including a plurality of display sections, the number of which is represented by the numeral M X N, characterised in that; said display board is further arranged to display a group of codes, the number of which is represented by a numeral m X n, and which are arranged in accordance with a predetermined pattern in the form of m X n rows where each of m and n is a positive integral number of two or more and each of M and N is a positive integral number larger than m and n, said display panel including a non-display section around said display sections having said group of codes displayed thereon; and said identification code input board further comprises a transparent key switch sheet superimposed on said display panel on the front side of the latter and including a plurality of switches arranged corresponding to said display sections the number of which is represented by said numeral M X N, a display converting unit arranged for selecting one of plural kinds of display manners, the number of which is represented by a numeral (M - m + 1) X (N - n + 1), every time said identification code input board is actuated, while said pattern for said group of codes is kept unchanged, and a code reading unit arranged for outputting a binary code signal for distinguishing a selected code from other ones when a user's finger is brought in contact with one of said display sections having said selected code displayed thereon while maintaining one of said display manners of said group of codes.

In practical use, in response to a coordinate signal outputted from the transparent key switch superimposed on the display panel, a microcomputer is activated to properly actuate an electromagnetic actuator for actuating the electrical lock or the like.

Usually, the microcomputer includes a microprocessor serving as a central processing unit, a memory serving as a memorizing unit and an interface serving as an input/output signal processing unit.

The coordinate signal outputted from the transparent key switch sheet is inputted into the display panel via the microcomputer and a common driver.

The display converting unit and the code reading unit are electrically connected to the display panel to generate a code signal which in turn is temporarily stored and subsequently processed to create an identification code to be specifically given to the identification code input board.

Usually, a group of codes are composed of a combination of some of a plurality of numerals with some of a plurality of alphabets or similar symbols.

With the input board constructed in the above-described manner, a group of codes of which number is represented by a numeral of m X n are caused to move within the range defined by the display panel including a plurality of display sections, of which number is represented by a numeral of M X N, with the aid of the display converting unit while the arrangement pattern of the group of codes is kept unchanged. At this time, a non-display section appears around the display sections which serve to display the group of codes thereon.

When significant consideration is placed on a specific code among the group of codes of which number is represented by a numeral of m X n, since the relative position of the specific code is kept constant in the group of codes although the display position of the specific code is caused to vary within the range defined by the display panel, the specific code can easily be searched for with the input board in the same manner as the conventional input board.

In addition, when significant consideration is placed on another specific code among the group of codes of which number is represented by a numeral of m X n, since the display position of the specific code on the display panel is caused vary within the range defined by the display panel every time the electrical lock is actuated, an output signal from the transparent key switch sheet, i.e., a coordinate signal representing the coordinate position of the specific code on the display panel is caused to likewise vary within the range defined by the display panel. Thus, the coordinate signal varies in various manners of which number is represented by a numeral of (M - m + 1) X (N - n + 1).

When it is assumed that a coordinate signal outputted from the transparent key switch sheet superimposed on the front surface of the display panel is used as a code signal as it is, code signals of plural kinds, of which number is represented by a numeral of (M - m + 1) X (N - n + 1), are generated with respect to a single identification code.

Since the input board includes a code reading unit according to the present invention, each code signal having a certain code specifically allocated thereto does not vary no matter how the position of the code on the display panel varies.

The code signals each read from the display panel with the aid of the code reading unit are successively fed to a controlling circuit in the microcomputer for the electrical lock.

Other objects, features and advantages of the present invention will become apparent from reading of the following description which has been made in conjunction with the accompanying drawings.

Fig. 1 is a block diagram of an identification code input board employable for an electrical lock constructed according to an embodiment of the present invention.

Fig. 2 is a block diagram of the identification code input board, particularly showing the structure of a display panel for the identification code input board.

Fig. 3 is a block diagram which schematically shows essential components constituting a control unit for the displaying panel of the electrical lock.

Fig. 4 is a flowchart which shows a series of steps to be executed by a microcomputer for controlling the controlling unit for the electrical lock.

Fig. 5 is an illustrative front view of the display panel for explaining a plurality of key switch numbers.

The present invention will now be described in detail hereinafter with reference to the accompanying drawings which illustrate an identification code input board (hereinafter referred to simply as an input board) employable for an electrical lock constructed according to an embodiment of the present invention.

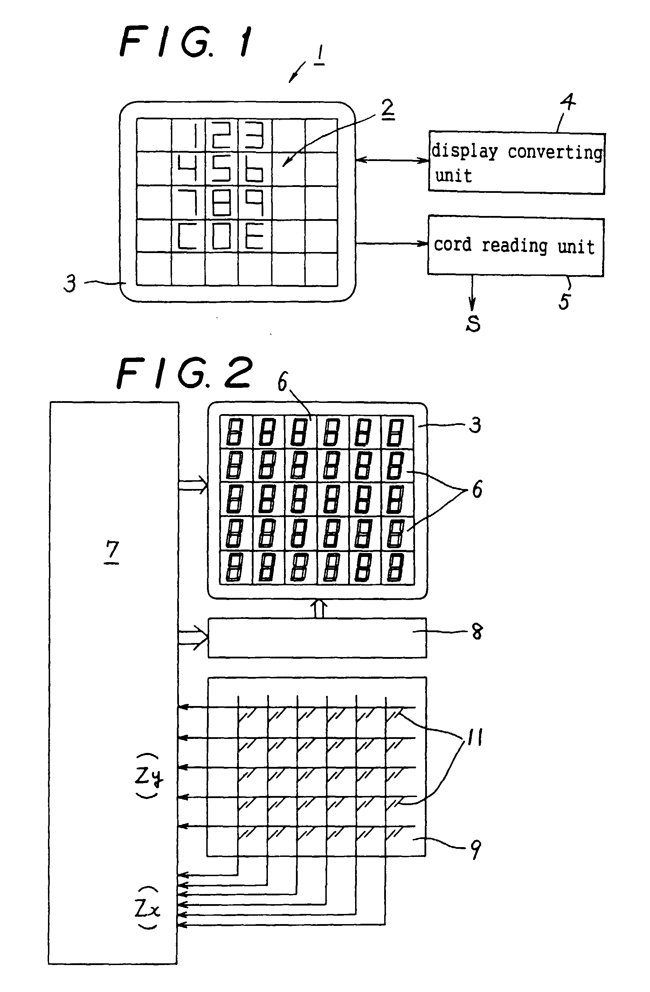

In Fig. 1, reference numeral 1 designates an input board to which the present invention is applied. Arabic numerals, Japanese alphabets (hiragana or katakana) and ordinary alphabets are employable for the input board as identification codes for the electrical lock. In this embodiment, description will be made below with respect to the input board having twelve codes comprising ten numerals 0 to 9 and two alphabets C and E employed therefor in the same manner as the conventional input board.

In Fig. 2, reference numeral 3 designates a display panel. The display panel 3 includes thirty display sections 6 of which number is represented by a numeral of five lines X six rows. Here, it is assumed that each display section 6 is composed of seven light emitting diodes (hereinafter referred to as LED). It is obvious that the display screen of the display panel 3 may be prepared in the form of a liquid crystal display screen.

Each display section 6 can display one of the ten arabic numerals 0 to 9 and the two alphabets C and E by selectively activating some of LED. As shown in Fig. 1, the total twelve codes constitute a group of codes 2 arranged in accordance with a predetermined arrangement pattern defined by four lines X three rows.

The display panel 3 is controlled by a microcomputer 7 and a display common driver 8 each of which will be described later. The microcomputer 7 and the display common driver 8 controllably drive only twelve display sections 6 among the total thirty display sections 6.

A transparent key switch sheet 9 is superimposed on the front surface of the display panel 3. Total thirty switches 11 are crosswise arranged on the transparent key switch sheet 9 corresponding to the display sections 6 on the display panel 3.

When a user's finger is brought in contact with the code displayed on the display section 6 or the code depressed by the user's finger, one of the switches 11 superimposed on the display panel 3 is turned off, causing a coordinate signal representing the actuated switch 11 to be fed to the microcomputer 7. On receipt of the coordinate signal, a user can know with the aid of the microcomputer 7 which one of the thirty display sections 6 is selected.

Since the structure of the display panel 3 and the transparent key switch 9 is substantially same to that in the conventional input board, repeated description will not be required.

As shown in Fig. 1, the input board 1 includes a display converting unit 4 and a code reading unit 5 both of which are constructed by electric circuits. usually, the electrical lock electrically detects the processing state of the identification code inputted into the input board 1, the opened/closed state of a door and the locked/unlocked state of the electrical lock with the aid of the microcomputer 7. With such detection, an electrical signal is outputted from the electrical lock to the microcomputer 7, and subsequently, in response to the electrical signal, the microcomputer 7 controls the electrical lock on the total basis. For this reason, it is practically desirable that the display converting unit 4 and the code reading unit 5 serve as a part of the microcomputer 7.

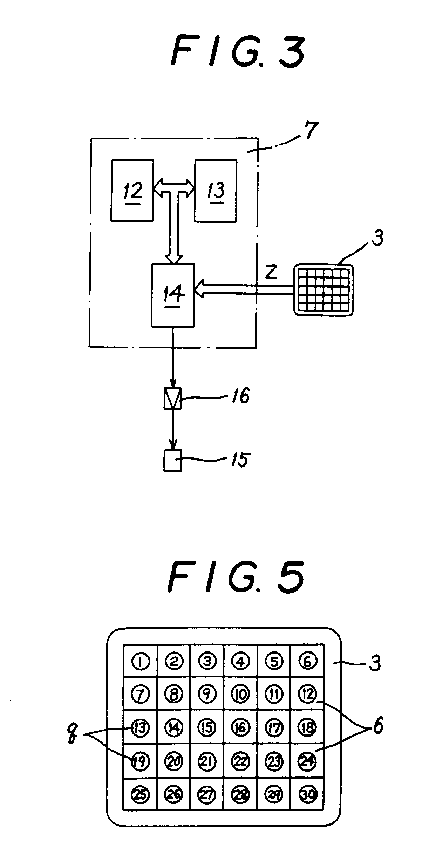

As shown in Fig. 2 and Fig. 3, a coordinate signal Z outputted from the transparent key switch sheet 9 is fed to the microcomputer 7. As is best seen in Fig. 3, the microcomputer 7 includes a microprocessor (central processing unit ) 12, a memory (memorizing unit) 13 and an interface (input/output signal processing circuit) 14 as main components.

The electrical lock includes an electromagnetic actuator 15 which is adapted to receive a locking/unlocking signal from the microcomputer 7 via an amplifier 16 so as to perform a predetermined locking/unlocking operation. Usually, the electrical lock feeds to the microcomputer 7 a signal which represents the opened/closed state of the door or the locked/unlocked state of the electrical lock, in order to properly control a building having the electrical lock installed therefor on the total basis. However, since the foregoing control does not form any part of the present invention, detailed description will not be required.

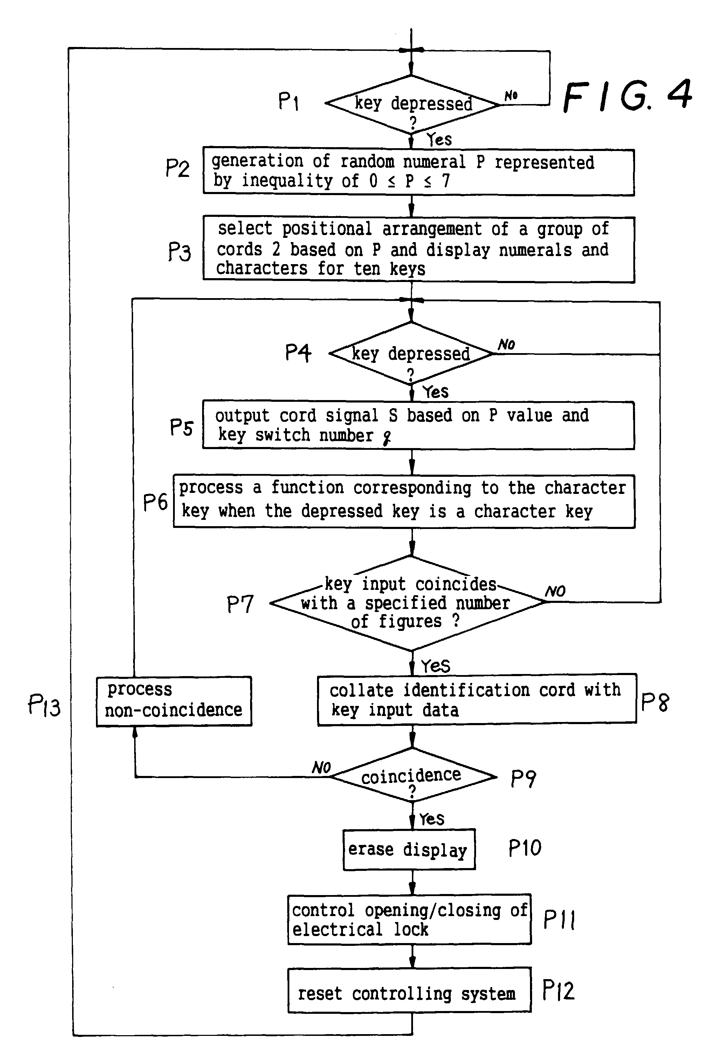

To properly control the electrical lock, the microcomputer 7 executes a series of steps represented by a flowchart shown in Fig. 4. In the drawing, reference characters P1 to P13 designate a plurality of steps to be executed by the microcomputer 7.

Next, a mode of operation of the electrical lock including the input board 1 will be described below with reference to Fig. 4.

Prior to description of the flowchart, the basic technical concept of the display converting unit 4 and the code reading unit 5 associated with the input board 1 will briefly be described below.

First, consideration is taken as to how many kinds of display patterns are available in the display panel 3 while the arrangement pattern of a group of codes 2 is kept unchanged.

To this end, a certain code among the group of codes 2, e.g., an arabic numeral 1 is taken into account, and subsequently, the range, where the arabic numeral 1 moves within the range defined by the display panel 3 while the arrangement pattern of the group of codes 2 is kept unchanged, is counted.

In the embodiment as shown in Fig. 1, the range where the arabic numeral 1 moves within the range of the display panel 3 is limited only to eight display sections 6 of which number is represented by a numeral of two lines X four rows at the left upper corner of the display panel 3. To distinguish the eight display sections 6 from other ones, a section number p (not shown) designated by numerals 0 to 7 is allocated to each of the eight display sections 6.

A section number p is randomly generated by first key touch in response to an input of the identification code into the microcomputer 7, and subsequently, a numeral 1 is placed on the display section 6 where the section number p is generated in that way.

At this time, since other numerals and the alphabets C and E are held in the relative positional relationship relative to the numeral 1, they are automatically received in the corresponding display sections 6.

For example, such a software that a numeral 2 is allocated adjacent to the numeral 1 rightward of the same, a numeral 2 is located adjacent to the numeral 1 rightward of the same and a numeral 4 is located adjacent to the numeral 1 downward of the same as shown in Fig. 1 can easily be produced by any expert in the art.

At this time, as shown in Fig. 5, key switch numbers q designated by numerals 1 to 30 are allocated to all the display sections 6 on the display panel 3, and a binarized code signal S is temporarily stored in a q memory among thirty q memories (not shown) disposed corresponding to the respective key switch numbers q in order to distinguish a certain code from other ones while a key switch number q of the display section 6 for displaying a numeral or an alphabet belonging to the group of codes 2 is taken as an address.

Incidentally, the key switch number q corresponding to the coordinate signal Z outputted from the transparent key switch 9 in the one-to-one relationship. Alternatively, the coordinate signal Z may be substituted for the key switch number q.

When a certain code on the input board 1 is specifically designated by a user's finger, the key switch number q corresponding to the display section 6 having the foregoing code displayed thereon is derived from the transparent key switch 9, whereby a code signal S can be read from the q memory while the q memory is taken as an address.

Here, a series of steps shown in the flowchart will be described below.

Controlling/calculating of the microcomputer 7 is automatically started after a power source for the electrical lock is turned on, whereby the program goes to Step P1 in which the microcomputer 7 is held in the waiting state.

In Step P1, the microcomputer 7 checks whether the switches 11 on the transparent key switch sheet 9 are actuated or not. When a certain switch 11 is depressed, i.e., one of the thirty switches 11 is depressed, the program goes to Step P2 in which a certain numeral among the eight numerals 0 to 7 is designated as a section number p.

To generate this section number p, it is required that the eight numerals of 0 to 7 are always generated for a predetermined period of time so that an output from a counter (not shown) is sampled in such a timing relationship that the transparent key switch sheet 9 is initially depressed.

Otherwise, the eight numerals of 0 to 7 are randomly stored in a read only memory so that each of the eight numerals is successively read while its address is changed every time the transparent key switch 9 is initially depressed.

When the section number p is obtained in Step P2, the program goes to Step P3 in which a display manner for the group of codes 2 is selected corresponding to the section number p. Specifically, as mentioned above, e.g., a numeral 1 is first placed on the display section 6 corresponding to the section number p, and subsequently, other numerals and alphabets are successively placed on the corresponding display sections 6 depending on the relative positional relationship relative to the numeral 1. This causes the operation of the display converting unit 4 to be terminated.

Next, the program goes to Step P4 in which the microcomputer 7 waits for an input of the certain identification code into the microcomputer 7. When the display section 6 having the selected code displayed thereon is depressed by a user's finger, the program goes to Step P5 in which a code signal S representing the code selected from the section number p and the key switch number q is outputted from the microcomputer 7.

Specifically, as mentioned above, the code signal S temporarily stored in the q memory is read from the q memory while the key switch number q is taken as an address.

In case that a display section 6 other than the display section 6 having the group of codes 2 displayed thereon is designated by the microcomputer 7, no code signal is generated at this time.

When the display code is an alphabet C or E, the program goes to Step P6 in which the function allocated to this alphabet is processed by the microcomputer 7. Thus, the operation of the code reading unit 5 is terminated.

Incidentally, Step P7 to Stp P13 are concerned with a process of processing the code signal S derived from the input board 1 constructed according to the embodiment of the present invention and do not any part of the present invention. For this reason, these steps will briefly be described below.

In Step P7, the microcomputer 7 counts the number of generations of the code signal S. For example, in case that the given identification code is to be represented by a numeral of four figures, when it is found that the identification code does not assume a numeral of four figures, the program returns to Step P4 in which the microcomputer 7 is held in the waiting state until a next input is taken in the microcomputer 7. On the contrary, when it is found that the identification code assumes a numeral of four figures, the program goes to Step P8 and Step P9 in which the inputted identification code is collated with the preliminarily registered identification code.

When the inputted identification code coincides with the preliminarily registered identification code, the program goes to Step P10 in which the display appearing on the display panel 3 is erased, and subsequently, the program goes to Step P11 in which electricity is fed to the electromagnetic actuator for the electrical lock for locking or unlocking the electrical lock. Alternatively, the feeding of electricity to the electromagnetic actuator for the electrical lock may be interrupted.

Next, the program goes to Step P12 in which all the control circuits are restored to the original state, and thereafter, the program returns to Step P1 in which the microcomputer 7 is ready to execute subsequent actuation of the electrical lock.

In case that it is found in Step P9 that the inputted identification code does not coincide with the preliminarily registered identification code, the program goes to Step P13 sideward of Step P9. In Step P13, the microcomputer 7 executes the processing preset to be executed in case of the foregoing non-coincidence, and thereafter, the program returns to Step P4 in which the microcomputer 7 is ready to receive an input for correcting the identification code which does not coincide with the preliminarily registered identification code.

As is apparent from the above description, since a group of codes represented by a numeral of m X n are caused to move within the range defined by the display panel for the purpose of displaying, there does not arise a malfunction that frictional injury occurs only on a certain surface of the display section or undesirable contamination adheres to the foregoing surface even though the same identification code is used by a specific user for a long time. Thus, there is no possibility that the identification code constructed by mathematic permutations and combinations is unexpectedly known by a third person. Consequently, safety of the electrical lock can substantially be improved. In addition, there does not arise another malfunction that an activating unit for an important equipment is undesirably actuated by an unauthorized person.

Further, since the group of codes represented by a numeral of m X n are caused to move within the range defined by the display panel while the arrangement pattern of the codes is kept unchanged, only the substantially same time as that of the conventional input board is required for searching for the selected code, resulting in the input board of the present invention being used with excellent practical convenience.

While the present invention has been described above merely with respect to a single preferred embodiment thereof, it should of course be understood that the present invention should not be limited only to this embodiment but various change or modification may be made without departure from the scope of the invention as defined by the appended claims.

## Claims

1. An identification code input board for an electrical lock, comprising:
a display panel (3) crosswise arranged in the form of M lines X N rows and including a plurality of display sections (6), the number of which is represented by the numeral M X N,
characterised in that;
said display panel (3) is further arranged to display a group of codes (2), the number of which is represented by a numeral m X n, and which are arranged in accordance with a predetermined pattern in the form of m X n rows where each of m and n is a positive integral number of two or more and each of M and N is a positive integral number larger than m and n, said display panel (3) including a non-display section around said display sections (6) having said group of codes (2) displayed thereon; and
said identification code input board further comprises:- a transparent key switch sheet (9) superimposed on said display panel (3) on the front side of the latter and including a plurality of switches arranged corresponding to said display sections (6) the number of which is represented by said numeral M X N,
a display converting unit (4) arranged for selecting one of plural kinds of display manners, the number of which is represented by a numeral (M - m + 1) X (N - n + 1), every time said identification code input board is actuated, while said pattern for said group of codes (2) is kept unchanged, and
a code reading unit (5) arranged for outputting a binary code signal for distinguishing a selected code from other ones when a user's finger is brought in contact with one of said display sections (6) having said selected code displayed thereon while maintaining one of said display manners of said group of codes (2).

2. An identification code input board as claimed in claim 1, wherein in response to a coordinate signal (Z) output from said transparent key switch sheet (9), a microcomputer (7) is arranged to be activated to properly actuate an electromagnetic actuator (15) for actuating said electrical lock.

3. An identification code input board as claimed in claim 2, wherein said microcomputer (7) includes a microprocessor (12) serving as a central processing unit, a memory (13) serving as a memorizing unit and an interface (14) serving as an input/output signal processing unit.

4. An identification input code board as claimed in claim 3, wherein said coordinate signal (Z) output from said transparent key switch sheet (9) is transmitted to said electrical actuator (15) via said interface (14) and an amplifier (16).

5. An identification code input board as claimed in claim 2, wherein said coordinate signal (Z) output from said transparent key switch (9) is inputted into said display panel (6) via said microcomputer (7) and a display common driver (8).

6. An identification code input board as claimed in any preceding claim, wherein said display converting unit (4) and said code reading unit (5) are arranged to be electrically connected to said display panel (3) which is arranged to generate a code signal which in turn is temporarily stored and subsequently processed to create an identification code to be given to said identification code input board (1).

7. An identification code input board as claimed in any preceding claim, wherein said group of codes (2) are composed of a combination of some of a plurality of numerals with some of a plurality of alphabetic characters or similar symbols.

## Patentansprüche

1. Code-Eingabevorrichtung für ein elektrisches Schloß, umfassend:
ein Anzeigefeld (3), kreuzweise angeordnet in Form von M Zeilen x N Reihen und mit einer Mehrzahl von Anzeigeabschnitten (6), deren Anzahl der Ziffer M x N entspricht, **dadurch gekennzeichnet,** daß
das genannte Anzeigefeld (3) so angeordnet ist, daß eine Gruppe von Codes (2) angezeigt werden kann, deren Anzahl einer Ziffer m x n entspricht und die in Übereinstimmung mit einem festgelegten Muster in Form von m x n Reihen angeordnet sind, wobei m und n positive ganze Zahlen von zwei oder mehr sind und M und N positive ganze Zahlen größer als m und n sind, und das genannte Anzeigefeld (3) um die genannten Anzeigeabschnitte (6) herum, auf denen die genannten Codegruppen (2) angezeigt werden, einen nicht für die Anzeige bestimmten Abschnitt umfaßt; und
die genannte Code-Eingabevorrichtung weiter umfaßt:
eine transparente Tastschalterfolie (9), die über die Vorderseite des genannten Anzeigefelds (3) gelegt ist und eine Reihe von Schaltern umfaßt, welche so angeordnet sind, daß sie den genannten Anzeigeabschnitten (6) entsprechen, deren Zahl der genannten Ziffer M x N entspricht;
eine Anzeigeumschalteinheit (4), die so angeordnet ist, daß bei jeder Betätigung der genannten Code-Eingabevorrichtung eine von mehreren Anzeigearten ausgewählt wird, deren Anzahl der Ziffer (M - m + 1) x (N - n + 1) entspricht, während das genannte Muster für die genannte Codegruppe (2) unverändert beibehalten wird; und
eine Codeleseeinheit (5), die so angeordnet ist, daß sie ein binäres Codesignal für die Unterscheidung eines ausgewählten Codes von anderen Codes ausgibt, wenn ein Finger eines Benutzers in Kontakt mit einem der genannten Anzeigeabschnitte (6) gebracht wird, auf denen der genannte ausgewählte Code angezeigt wird, während eine der genannten Anzeigearten der genannten Codegruppe (2) beibehalten wird.

2. Code-Eingabevorrichtung nach Anspruch 1, **dadurch gekennzeichnet,** daß ein Mikrocomputer (7) als Reaktion auf ein Koordinaten-Ausgangssignal (Z) der genannten transparenten Tastschalterfolie (9) so angesteuert wird, daß er ein elektromagnetisches Stellglied (15) für die Betätigung des genannten elektrischen Schlosses betätigt.

3. Code-Eingabevorrichtung nach Anspruch 2, **dadurch gekennzeichnet,** daß der genannte Mikrocomputer (7) einen Mikroprozessor (12) als Zentraleinheit, einen Speicher (13) als Speichereinheit und eine Schnittstelle (14) für die Verarbeitung von Ein-/Ausgangssignalen umfaßt.

4. Code-Eingabevorrichtung nach Anspruch 3, **dadurch gekennzeichnet,** daß das genannte Koordinaten-Ausgangssignal (Z) der genannten transparenten Tastschalterfolie (9) über die genannte Schnittstelle (14) und einen Verstärker (16) an das genannte elektrische Stellglied (15) gesendet wird.

5. Code-Eingabevorrichtung nach Anspruch 2, **dadurch gekennzeichnet,** daß das genannte Koordinaten-Ausgangssignal (Z) der genannten transparenten Tastschalterfolie über den genannten Mikrocomputer (7) und einen gemeinsamen Anzeigetreiber (8) in das genannte Anzeigefeld (3) eingespeist wird.

6. Code-Eingabevorrichtung nach einem der vorstehenden Ansprüche, **dadurch gekennzeichnet,** daß die genannte Anzeigeumschalteinheit (4) und die genannte Codeleseeinheit (5) so angeordnet sind, daß sie elektrisch mit dem genannten Anzeigefeld (3) verbunden sind, welches so angeordnet ist, daß es ein Codesignal generiert, das wiederum zwischengespeichert und anschließend zu einem Identifikationscode verarbeitet wird, der der genannten Code-Eingabevorrichtung (1) zugewiesen wird.

7. Code-Eingabevorrichtung nach einem der vorstehenden Ansprüche, **dadurch gekennzeichnet,** daß die genannte Codegruppe (2) aus einer Kombination von einigen einer Vielzahl von Ziffern mit einigen einer Vielzahl von alphabetischen Zeichen oder ähnlichen Symbolen besteht.

## Revendications

1. Tableau d'entrée de code d'identification pour une serrure électrique, comprenant:
un tableau d'affichage (3), conçu de manière croisée sous la forme de M lignes x N rangées et incluant une pluralité de parties d'affichage (6), dont le nombre est représenté par le chiffre M x N, caractérisé en ce que:
ledit panneau d'affichage (3) est de plus prévu pour afficher un groupe de codes (2), dont le nombre est représenté par le chiffre m x n, et qui est conçu selon une structure prédéterminée, sous la forme de m x n rangées où chacun des nombres m et n est un nombre entier positif de 2 ou plus et chacun des nombres M et N est un nombre entier positif plus grand que m et n, ledit panneau d'affichage (3) incluant une partie de non-affichage autour desdites parties d'affichage (6) sur lesquelles ledit groupe de codes (2) est affiché; et
ledit tableau d'entrée de code d'identification comprend de plus :
une feuille transparente de commutation de clé (9), superposée audit panneau d'affichage (3), du côté avant de ce dernier, et incluant une pluralité de commutateurs placés en correspondance avec lesdites parties d'affichage (6) dont le nombre est représenté par ledit chiffre M x N,
une unité de conversion d'affichage (4), prévue pour sélectionner un parmi plusieurs types de manières d'afficher, dont le nombre est représenté par le chiffre (M - m + 1) x (N - n + 1), chaque fois que ledit tableau d'entrée de code d'identification est activé, alors que ladite structure pour ledit groupe de codes (2) reste inchangée, et
une unité de lecture de code (5), prévue pour émettre un signal de code binaire pour distinguer un code choisi parmi d'autres, lorsque le doigt d'un usager est mis en contact avec l'une desdites parties d'affichage (6) sur lesquelles ledit code choisi est affiché, en maintenant une desdites manières d'afficher ledit groupe de codes (2).

2. Tableau d'entrée de code d'identification tel que revendiqué dans la revendication 1, dans lequel, en réponse à la sortie d'un signal de coordonnée (Z) depuis ladite feuille transparente de commutation de clé (9), un micro-ordinateur (7) est prévu pour être activé afin de mettre en oeuvre correctement un actionneur électromagnétique (15) pour mettre en marche ladite serrure électrique.

3. Tableau d'entrée de code d'identification tel que revendiqué dans la revendication 2, dans lequel ledit micro-ordinateur (7) inclut un microprocesseur (12) servant d'unité centrale de traitement, une mémoire (13) servant d'unité de mémorisation et une interface (14) servant d'unité de traitement de signal d'entrée/sortie.

4. Tableau d'entrée de code d'identification tel que revendiqué dans la revendication 3, dans lequel la sortie dudit signal de coordonnée (Z), depuis ladite feuille transparente de commutation de clé (9), est transmise audit actionneur électrique (15) via ladite interface (14) et un amplificateur (16).

5. Tableau d'entrée de code d'identification tel que revendiqué dans la revendication 2, dans lequel la sortie dudit signal de coordonnée (Z), provenant dudit commutateur de clé transparent (9), est entrée dans ledit panneau d'affichage (6) via ledit micro-ordinateur (7) et une commande commune d'affichage (8).

6. Tableau d'entrée de code d'identification selon l'une quelconque des revendications précédentes, dans lequel ladite unité de conversion d'affichage (4) et ladite unité de lecture de code (5) sont conçues pour être connectées électriquement audit panneau d'affichage (3) qui est prévu pour générer un signal code qui, à son tour, est enregistré temporairement et traité ensuite pour créer un code d'identification à donner audit tableau d'entrée de code d'identification (1).

7. Tableau d'entrée de code d'identification selon l'une quelconque des revendications précédentes, dans lequel ledit groupe de codes (2) est composé d'une combinaison de quelques-uns parmi une pluralité de chiffres avec quelques-uns parmi une pluralité de caractères alphabétiques ou de symboles similaires.
